# EUROPÄISCHE PATENTSCHRIFT

(11) **EP 1 414 080 B1**
(45) Veröffentlichungstag und Bekanntmachung des Hinweises auf die Patenterteilung: **28.02.2007**
(21) Anmeldenummer: 03024481.8
(22) Anmeldetag: 23.10.2003
(51) Int. Cl.: H01L 41/09, F02M 51/06

(54) **Piezoelektrisches Aktorsystem**
Piezoelectric actuator system
Système d'actionnement piézoélectrique

(30) Priorität: 24.10.2002 DE 10249635
(43) Veröffentlichungstag der Anmeldung: 28.04.2004
(73) Patentinhaber: Vermes Technik GmbH & Co. KG, 83624 Otterfing (DE)
(72) Erfinder: Hentschel, Lothar, 82024 Taufkirchen (DE)
(74) Vertreter: Koch, Günther

(56) Entgegenhaltungen:
- WO-A-00/55492
- WO-A-01/14731
- US-A- 4 022 166
- US-A- 5 941 611
- PATENT ABSTRACTS OF JAPAN Bd. 1998, Nr. 04, 31. März 1998 (1998-03-31) -& JP 09 310655 A (HITACHI LTD), 2. Dezember 1997 (1997-12-02)
- PATENT ABSTRACTS OF JAPAN Bd. 007, Nr. 159 (M-228), 13. Juli 1983 (1983-07-13) & JP 58 067933 A (NISSAN JIDOSHA KK), 22. April 1983 (1983-04-22)

## Beschreibung

Die Erfindung bezieht sich auf ein Positioniersystem mit einem Piezo-Aktor und einer integrierten Hebelübersetzung.

Derartige piezoelektrische Aktorsysteme dienen zur Durchführung von Stellbewegungen, die über kurze Stellwege mit hoher Stellgeschwindigkeit durchgeführt werden müssen. Da bei derartigen Piezo-Aktoren der Stellweg gering ist und nur ca. 1,2 bis 1,5 Promille ihrer Länge beträgt, muß für zahlreiche technische Anwendungen eine Übersetzung in größere Stellwege durchgeführt werden, was die Anordnung von entsprechenden Gelenken erfordert. Es ist hierbei bekannt, die Gelenke als Festkörpergelenke auszubilden, indem zwischen den gelenkig miteinander zu verbindenden Bauteilen ein entsprechend dünn ausgebildeter Steg ausgeführt wird, welcher durch seine elastische Verformung die gelenkige Verbindung ermöglicht. Hierbei ergeben sich jedoch Schwierigkeiten bezüglich der notwendigen Steifigkeit des Gesamtsystems.

Positioniersysteme mit einem Piezo-Aktor und einem Übersetzungshebel mit vorgespanntem Schaltstift sind bekannt aus WO-A-0 114 731 und US-A-5 941 611.

Es sind weiterhin Aktorsysteme bekannt, bei denen die Kraftübertragung auf Seiten des Piezo-Aktors mit Hilfe von kugeligen Druckstücken ausgeführt wird, um Biegemomente vom Piezo-Aktor fernzuhalten. Nachteilig ist hierbei jedoch die punktförmige Druckverteilung im Berührungspunkt der Kugel. Hierbei können materialbedingt im allgemeinen nicht die für einen hochdynamischen Betrieb erforderlichen Kräfte übertragen werden. Auch die Steifigkeit des sich bei Belastung schnell zu einer Fläche ausweitenden Berührungspunktes ist meist nicht befriedigend.

Schneidenförmige oder ballige Gelenke zur Kraftübertragung werden bei den bisher bekannten Ausführungen mit Federelementen vorgespannt, welche nicht an der übersetzten Bewegung teilnehmen, aufgrund ihres starken Kraftanstiegs bei der Bewegung aber zu relativ hohen Übersetzungsverlusten führen. Bei Federelementen, welche an der übersetzten Bewegung teilnehmen, wird bei den bisher bekannten Ausführungen zumindest eine Lagerstelle formschlüssig ausgeführt, d.h. Achse oder Welle in Bohrung, was eine Gleitbewegung und damit hohen Verschleiß in dieser mit hohen Kräften beaufschlagten Lagerstelle zu Folge hat.

Der Erfindung liegt daher die Aufgabe zugrunde, ein piezoelektrisches Aktorsystem mit hoher Systemsteifigkeit und hohem Übersetzungs-Wirkungsgrad zu schaffen, bei dem hohe Kräfte mit hoher Dynamik verschleißfrei übertragen werden können.

Gelöst wird die gestellte Aufgabe durch die im Kennzeichnungsteil des Patentanspruchs 1 angegebenen Merkmale.

Da bei der erfindungsgemäßen Lösung das stark vorgespannte Federelement um das 20-Fache der übersetzten Bewegung vorgespannt wird, beträgt der Kraftanstieg bei der Bewegung des Systems nur 5 %, was zu einem Übersetzungswirkungsgrad von 97,5 % führt. Da alle Lagerstellen nur Abwälz-, aber keine Gleitbewegungen ausführen, wird die Bewegung nahezu verlust- und absolut verschleißfrei übertragen.

Die Linienkontakte werden dabei von Wälzgelenken gebildet, die zweckmäßigerweise fest in dem einen Teil angeordnet sind und auf denen sich der andere Teil abwälzen kann. Diese Wälzkörper können dabei zylindrisch ausgebildet sein oder auch eine Wälzkörper-Mantelfläche mit sich stetig oder unstetig änderndem Radius aufweisen. Im Extremfall kann der jeweilige Linienkontakt durch eine prismatische Schneide mit vorbestimmtem Radius gebildet werden. Der Linienkontakt kann zwischen einer ebenen Fläche des einen Teils und einer konvexen Fläche des anderen Teils gebildet werden, jedoch kann anstelle der ebenen Fläche auch eine konvexe oder konkave Fläche benutzt werden, auf der der Wälzkörper des anderen Teils abwälzbar ist.

Das Positionierglied wird vom Übersetzungshebel angetrieben und ist federnd mit diesem verbunden, um eine Entspannung des Aktor-Hebelsystems bei extern auf das Abtriebselement einwirkenden Kräften zu verhindern. Äußere Kräfte, die z.B. über einen Ventilsitz auf den Schaltstift wirken, dürfen nicht zur Entlastung des Aktorsystems führen, weil sonst der Zusammenhalt der Teile nicht mehr gewährleistet wäre. Aus diesem Grund erfolgt eine Abfederung in einer Richtung, in der anderen Richtung kann der Schaltstift erhebliche Kräfte aufnehmen, welche über den Hebel übersetzt auf den Piezo-Aktor übertragen werden.

Dadurch, daß die Übertragung bzw. Übersetzung der Dehnung des Piezo-Aktors über die Wälzkontakte erfolgt, ergeben sich fast keine Übersetzungsverluste. Die maximale Steifigkeit wird dadurch gewährleistet, daß die Wälzkontakte als Linienkontakte ausgebildet sind. Die Wälzgelenke können durch optimierte Materialauswahl verschleißfest gewählt werden und beispielsweise aus Keramikmaterial bestehen. Durch eine Federvorspannung, die mittels Spiral-, Blatt-, Teller- oder Druckschraubenfedern erfolgen kann, wird eine spielfreie Anordnung gewährleistet, wobei gleichzeitig das Positionierglied gegenüber dem Übersetzungshebel abgefedert wird.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 ist eine Schnittansicht des erfindungsgemäßen Positioniersystems, geschnitten nach der Linie I-I gemäß Fig. 2;
Fig. 2 ist eine Draufsicht auf das System nach Fig. 1;
Fig. 3 ist eine der Fig. 1 entsprechende Schnittansicht eines weiteren Ausführungsbeispiels eines erfindungsgemäßen Positioniersystems;
Fig. 4 ist eine der Fig. 3 entsprechende Schnittansicht mit angesetztem geöffnetem Ventil;
Fig. 5 ist eine Schnittansicht gemäß Fig. 4 mit geschlossenem Ventil.

Das den Gegenstand der Erfindung bildende hochdynamische Aktorsystem weist einen geschlossenen Gehäuserahmen 10 auf, der ein Führungsloch für das nach außen vorstehende als Schaltstift ausgebildete Positionierglied 12 aufweist. Der aus einem Stapel von Piezoelementen bestehende Piezo-Aktor 14 ändert bei Anlegen einer Spannung an seine nicht dargestellten Elektroden seine Länge. Diese Längenänderung wird über einen Übersetzungshebel auf das Positionierglied 12 übertragen. Der Piezo-Aktor 14 ist einerseits über einen Zylinderstift 18 am Gehäuserahmen 10 abgestützt. Stattdessen kann der Piezo-Aktor 14 auch direkt starr am Gehäuse abgestützt sein. Der Zylinderstift 18 ist in eine im Querschnitt entsprechend geformte Nut derart eingesetzt, daß er mit der ebenen Oberfläche des Piezo-Aktors in Linienberührung steht und hierdurch einen ersten Linienkontakt bildet. Das andere Ende des Piezo-Aktors ruht auf einer Zylindermantelfläche am Ende des kurzen Hebelarmes des Übersetzungshebels 16. Mit dieser Mantelfläche 20 steht das andere flach ausgebildete Ende des Piezo-Aktors über einen zweiten Linienkontakt in Verbindung, der parallel zu dem ersten Linienkontakt verläuft. Die Drehachse des Übersetzungshebels 16 wird von einem weiteren Zylinderstift 22 gebildet, der in eine Gehäusenut eingelegt ist und einen dritten Linienkontakt mit dem Übersetzungshebel 16 bildet, welcher Linienkontakt parallel zum ersten und zweiten Linienkontakt verläuft. Die Linienkontakte können, wie in der Zeichnung dargestellt, durch zylindrisch gewölbte Oberflächen gebildet werden. Die Krümmung muß jedoch nicht zylindrisch verlaufen, sondern kann sich von beiden Seiten kontinuierlich oder diskontinuierlich ändern. Der Linienkontakt kann auch von einer mehr oder weniger scharfen Kante gebildet werden, die von einem entsprechend gestellten prismatischen Körper getragen wird.

Der lange Hebelarm des Übersetzungshebels 16 weist eine Kugelschale 24 auf, in die eine Kugelkalotte 26 einpaßt. Durch eine axiale Bohrung 28 der Kugelkalotte und eine hiermit fluchtende Bohrung 30 des Übersetzungshebels 16 steht der Schaltstift 12 hindurch, der sich mit einem erweiternden Bund 32 an der Kugelkalotte 26 abstützt.

Axial ausgerichtet auf den Schaltstift 12 ist innerhalb des Gehäuserahmens 10 ein mit axialer Innenbohrung 34 versehener Lagerstift 36 fixiert, der eine erste Ringstufe 38 und eine zweite Ringstufe 40 aufweist. Eine erste Druckschraubenfeder 42 ist einerseits auf der Kugelkalotte 26 und andererseits auf der Ringstufe 38 des Lagerstiftes 36 abgestützt und spannt den Übersetzungshebel 16 gegen den Piezo-Aktor 14 vor. Eine zweite schwächere Druckschraubenfeder 44 ist auf der zweiten Ringstufe 30 bzw. dem Bund 32 des Schaltstiftes 12 abgestüzt und spannt diesen gegen die Kugelkalotte 26 vor.

Dadurch, daß sämtliche Wälzkontakte als Linienkontakte ausgebildet sind, ergibt sich eine maximale Steifigkeit, und durch die Federvorspannungen ergibt sich eine spielfreie Anordnung, wobei das Abtriebselement gegenüber dem Übersetzungshebel nochmals abgefedert ist. Dadurch, daß das Abtriebselement federnd mit dem Übersetzungshebel verbunden ist, wird eine Entspannung des Systems bei extern auf das Abtriebselement einwirkenden Kräften verhindert.

Bei dem dargestellten Ausführungsbeispiel sind die Zylinderstifte 18 und 22 fest im Gehäuserahmen angeordnet. Sie können jedoch auch fest am Piezo-Aktor bzw. am Übersetzungshebel angeordnet sein und an der Innenwand des Gehäuses ablaufen. Ebenso kann der Piezo-Aktor mit einer gewölbten Wälzfläche auf einer ebenen Fläche des Übersetzungshebels ablaufen.

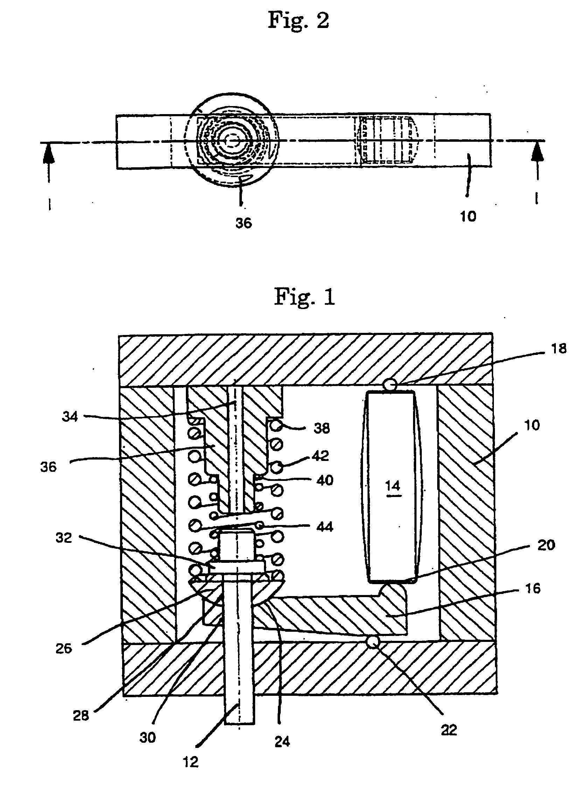

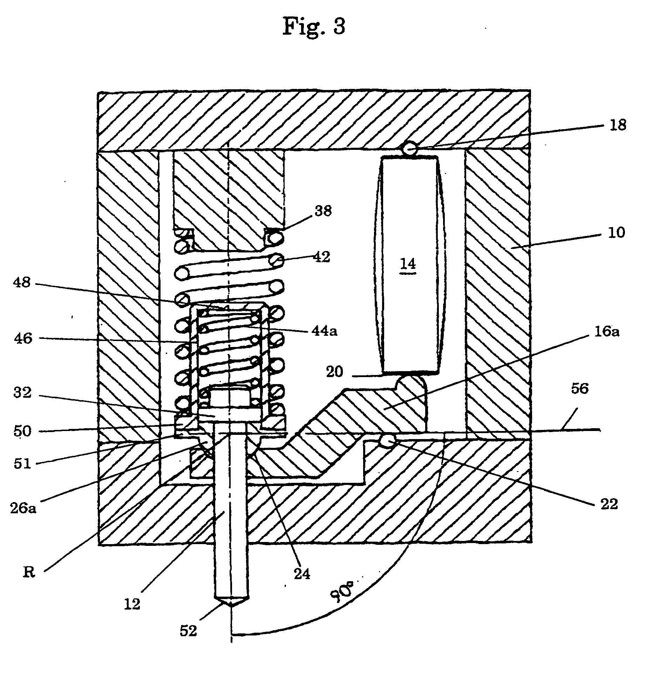

Das Ausführungsbeispiel gemäß Fig. 3 bis 5 unterscheidet sich von dem Ausführungsbeispiel nach Fig. 1 und 2 dadurch, daß die zweite Druckschraubenfeder 44a nicht direkt am Gehäuse, sondern über ein zylindrisches Federgehäuse 46 und die erste Druckschraubenfeder 42 an diesem Gehäuse 10 abgestützt ist. Hierbei wird das Gehäuse 46 von der ersten Druckschraubenfeder 42 umschlossen, die auf einem Außenflansch 50 des Gehäuses abgestützt ist. Der Gehäuseflansch 50 ruht seinerseits auf einem Außenflansch 51 der Kugelkalotte 26a. Vom Federgehäuse 46 umschlossen ist die zweite schwächere Druckschraubenfeder 44a, die sich einerseits am Bund 32 des Schaltstiftes 12 und andererseits am Boden 48 des Gehäuses 46 abstützt.

Der Kugelmittelpunkt R der Kugelkalotte 26a wird von einer Horizontalen 56, die die Schneidkante des Zylinderstiftes 22 berührt und senkrecht zur Achse des Stiftes 12 verläuft, gebildet.

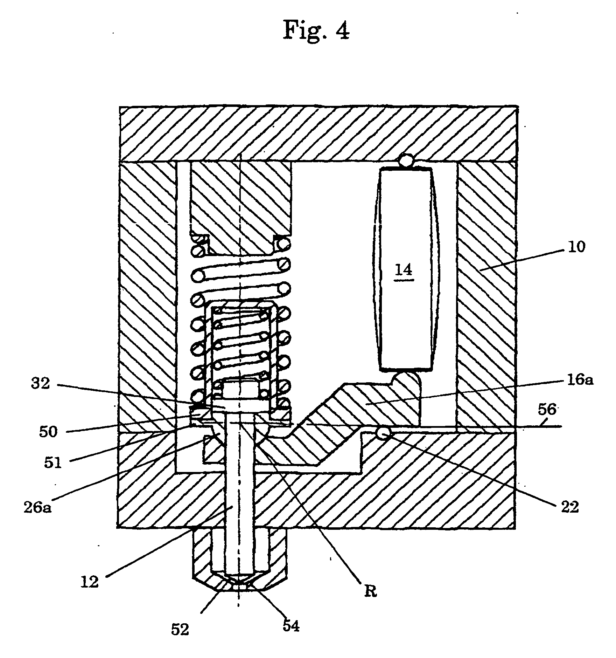

In der Stellung gemäß Fig. 4 hat der Piezo-Aktor 14 durch Streckung über den geköpften Übersetzungshebel 16a die Kugelkalotte 26a angehoben, so daß der Ventilstößel 52 vom Ventilsitz 54 abgehoben und das Ventil geöffnet ist. Die Kugelkalotte 26a hat in dieser Stellung über den Flansch 51 das Federgehäuse 46 gegen den Druck der ersten Feder 42 angehoben, wobei der Stift 12 von der zweiten Feder 44a beaufschlagt ist und mit seinem Flansch 32 von der Kugelkalotte 26a abgestützt ist.

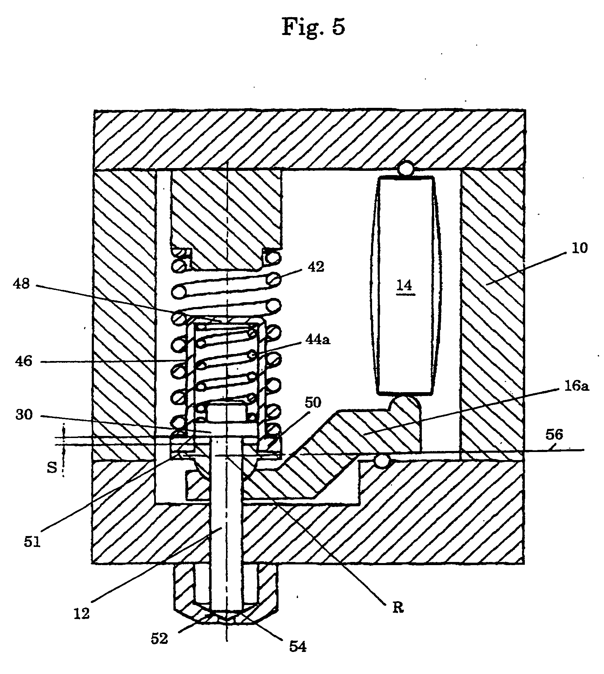

In der geschlossenen Ventilstellung gemäß Fig. 5 ist der Stift 12 gegenüber der Kugelkalotte 26a gegen die Wirkung der zweiten Feder angehoben, so daß ein Sicherheitsspalt S zwischen Kalottenoberfläche und Flansch 32 gebildet ist.

### Bezugszeichenliste

- 10: Gehäuserahmen
- 12: Positionierglied (Schaltstift)
- 14: Piezo-Aktor
- 16: Übersetzungshebel
- 16a: gekröpfter Übersetzungshebel
- 18: Zylinderstift
- 20: Zylindermantelfläche
- 22: weiterer Zylinderstift
- 24: Kugelschale
- 26: Kugelkalotte
- 26a: Kugelkalotte
- 28: axiale Bohrung
- 30: Bohrung
- 32: Bund
- 34: Innenbohrung
- 36: Lagerstift
- 38: erste Ringstufe
- 40: zweite Ringstufe
- 42: erste Druckschraubenfeder
- 44: zweite Druckschraubenfeder
- 44a: zweite Druckschraubenfeder
- 46: zylindrisches Federgehäuse
- 48: Boden
- 50: Außenflansch
- 51: Flansch
- 52: Ventilstößel
- 54: Ventilsitz
- 56: Horizontale
- R: Kugelmittelpunkt von 26
- S: Sicherheitsspalt

## Patentansprüche

1. Positioniersystem mit einem in einem geschlossenen Gehäuserahmen (10) angeordneten Piezo-Aktor mit integrierter Hebelübersetzung mit den folgenden Merkmalen:
- der Piezo-Aktor (14) ist einerseits über einen ersten Linienkontakt (18) am Gehäuserahmen (10) und andererseits über einen zweiten, zum ersten parallelen Linienkontakt (20) an dem kurzen Hebelarm eines Übersetzungshebels (16) abgestützt;
- die Schwenkachse des Übersetzungshebels (16) wird durch einen dritten, zum ersten und zweiten parallelen gehäusefesten Linienkontakt (22) gebildet;
- am langen Hebelarm des Übersetzungshebels (16) ist ein axial verschiebbarer, aus dem Gehäuserahmen (10) vorstehender Schaltstift (12) angelenkt;
- der Schaltstift (12) ist axial auf einen gehäusefesten Lagerstift (36) ausgerichtet, der parallel zur Längserstreckung des Aktors (14) im Gehäuserahmen angeordnet ist;
- der Übersetzungshebel (16) ist gegen den Piezo-Aktor (14) durch eine erste Druckschraubenfeder (42) vorgespannt, die an einer ersten Ringstufe (38) des Lagerstiftes (36) abgestützt ist und auf den langen Hebelarm des Übersetzungshebels wirkt;
- der Schaltstift (12) ist durch eine zweite, gegenüber der ersten Druckschraubenfeder (42) schwächere Druckschraubenfeder (44, 44a) an einer zweiten Ringstufe (40) des Lagerstiftes (36) abgestützt.

2. Positioniersystem nach Anspruch 1,
**dadurch gekennzeichnet, dass** die Linienkontakte (18, 20, 22) durch gewölbte Mantelflächen gebildet sind und die Mantelflächen zylindrisch ausgebildet sind.

3. Positioniersystem nach Anspruch 1,
**dadurch gekennzeichnet, dass** die Linienkontakte als prismatische Kanten ausgebildet sind.

4. Positioniersystem nach Anspruch 1, bei weichem die zweite Druckschraubenfeder (44a) von einem Federgehäuse (46) umschlossen ist, das auf einer Kugelkalotte (26) ruht, wobei die erste Druckschraubenfeder (42) auf einem Außenflansch (50) des Federgehäuses (46) und die zweite Druckschraubenfeder am Boden (48) des Federgehäuses (46) abgestützt ist.

5. Positioniersystem nach Anspruch 4, bei welchem der Mittelpunkt (R) der Kugelschale (24) bzw. der Kugelkalotte (26) auf der Achse des Schaltstiftes (12) an jener Stelle liegt, die senkrecht von der Verlängerung der Fläche des Übersetzungshebels (16) geschnitten wird, die den Linienkontakt (22) berührt.

6. Positioniersystem nach einem der Ansprüche 4 bis 5,
**dadurch gekennzeichnet, dass** der Schaltstift (12) den Ventilstößel eines Ventils (52, 54) bildet und der Schaltstift extern derart abgefedert ist, dass keine Entlastung des Kraftschlusses zwischen Hebel und Aktor auftritt und dass ein Sicherheitsspalt (S) zwischen Stiftbund (30) und Oberseite der Kugelkalotte (26a) gebildet ist.

## Claims

1. A positioning system comprising a piezoelectric actuator arranged in a closed housing frame (10), with an integrated lever transmission arrangement, having the following features:
- the piezoelectric actuator (14) is supported on the one hand on the housing frame (10) by way of a first line contact (18) and on the other hand on the short lever arm of a transmission lever (16) by way of a second line contact (20) parallel to the first;
- the pivot axis of the transmission lever (16) is formed by a third line contact (22) which is fixed with respect to the housing and is parallel to the first and second line contacts;
- an axially displaceable switching pin (12) which projects out of the housing frame (10) is pivoted on the long lever arm of the transmission lever (16);
- the switching pin (12) is aligned axially with a mounting pin (36) which is fixed with respect to the housing and which is arranged parallel to the longitudinal extent of the actuator (14) in the housing frame;
- the transmission lever (16) is biased against the piezoelectric actuator (14) by a first compression coil spring (42) which is supported against a first annular step (38) of the mounting pin (36) and which acts on the long lever arm of the transmission lever; and
- the switching pin (12) is supported against a second annular step (40) of the mounting pin (36) by a second compression coil spring (44, 44a) which is weaker than the first compression coil spring (42).

2. A positioning system according to claim 1 **characterised in that** the line contacts (18, 20, 22) are formed by curved peripheral surfaces and the peripheral surfaces are of a cylindrical configuration.

3. A positioning system according to claim 1 **characterised in that** the line contacts are in the form of prismatic edges.

4. A positioning system according to claim 1 wherein the second compression coil spring (44a) is enclosed by a spring housing (46) which rests on a ball portion (26), wherein the first compression coil spring (42) is supported on an outside flange (50) of the spring housing (46) and the second compression coil spring is supported at the end (48) of the spring housing (46).

5. A positioning system according to claim 4 wherein the centre point (R) of the ball shell (24) or the ball portion (26) is on the axis of the switching pin (12) at that location which is intersected (56) perpendicularly by the prolongation of the surface of the transmission lever (16), which touches the line contact (22).

6. A positioning system according to one of claims 4 and 5 **characterised in that** the switching pin (12) forms the valve pushrod of a valve (52, 54) and the switching pin is externally sprung in such a way that no relief of load of the force-locking connection between the lever and the actuator occurs and that a safety gap (S) is formed between a pin collar (30) and the top side of the ball portion (26a).

## Revendications

1. Système de positionnement comprenant un actionneur piézoélectrique avec transmission par levier disposé dans un cadre de boîtier fermé (10), présentant les caractéristiques suivantes :
- l'actionneur piézoélectrique (14) est appuyé d'un côté par l'intermédiaire d'un premier contact linéaire (18) sur le cadre de boîtier (10) et de l'autre côté par l'intermédiaire d'un deuxième contact linéaire (20), parallèle au premier, sur le bras de levier court d'un levier de transmission ou de démultiplication (16) ;
- l'axe de pivotement du levier de transmission ou de démultiplication (16) est formé par un troisième contact linéaire (22) lié au boîtier, parallèle au premier et au deuxième ;
- une tige de commande (12) mobile axialement, dépassant du cadre de boîtier (10), est articulée sur le bras de levier long du levier de transmission ou de démultiplication (16) ;
- la tige de commande (12) est orientée axialement sur une tige d'appui (36) liée au boîtier qui est disposée parallèlement à l'extension longitudinale de l'actionneur (14) dans le cadre de boîtier ;
- le levier de transmission ou de démultiplication (16) est précontraint contre l'actionneur piézoélectrique (14) par un premier ressort cylindrique de compression ou à vis de pression (42) qui est appuyé sur un premier gradin annulaire (38) de la tige d'appui (36) et agit sur le bras de levier long du levier de transmission ;
- la tige de commande (12) est appuyée par un deuxième ressort cylindrique de compression ou à vis de pression (44, 44a), plus faible par rapport au premier ressort cylindrique de compression ou à vis de pression (42), sur un deuxième gradin annulaire (40) de la tige d'appui (36).

2. Système de positionnement selon la revendication 1,
**caractérisé en ce que** les contacts linéaires (18, 20, 22) sont formés de surfaces périphériques bombées et les surfaces périphériques sont de forme cylindrique.

3. Système de positionnement selon la revendication 1,
**caractérisé en ce que** les contacts linéaires sont réalisés sous la forme d'arêtes prismatiques.

4. Système de positionnement selon la revendication 1, dans lequel le deuxième ressort cylindrique de compression (44a) est entouré par un boîtier de ressort (46) qui repose sur une calotte sphérique (26), le premier ressort cylindrique de compression (42) étant appuyé sur un flasque extérieur (50) du boîtier de ressort (46) et le deuxième ressort cylindrique de compression (44a) sur le fond (48) du boîtier de ressort (46).

5. Système de positionnement selon la revendication 4, dans lequel le centre (R) de la coque sphérique (24) ou de la calotte sphérique (26) se situe sur l'axe de la tige de commande (12) au point qui est coupé perpendiculairement par le prolongement de la surface du levier de transmission (16) qui touche le contact linéaire (22).

6. Système de positionnement selon l'une des revendications 4 à 5,
**caractérisé en ce que** la tige de commande (12) forme le poussoir de clapet d'un clapet (52, 54) et que la tige de commande est amortie extérieurement de manière à ce qu'il n'apparaisse pas de décharge de la liaison par force entre levier et actionneur et qu'un jeu de sécurité (S) soit formé entre embase de tige (30) et face supérieure de la calotte sphérique (26a).
